# EUROPEAN PATENT SPECIFICATION

(11) **EP 4 030 445 B1**
(45) Date of publication and mention of the grant of the patent: **06.09.2023**
(21) Application number: 22151551.3
(22) Date of filing: 14.01.2022
(51) Int. Cl.: H01B 7/36, C09K 9/02, B60L 53/18, G01K 11/16

(54) **CABLE**
KABEL
CÂBLE

(30) Priority: 19.01.2021 IT 202100000830
(43) Date of publication of application: 20.07.2022
(73) Proprietor: Aristoncavi S.p.A., 36040 Brendola (VI) (IT)
(72) Inventor: PIRANA, Matteo, 36040 Brendola (VI) (IT)
(74) Representative: Braidotti, Andrea

(56) References cited:
- EP-A1- 3 651 307
- DE-A1-102015 009 407
- US-A1- 2020 381 142

## Description

The present invention refers to an electric cable for recharging an electric vehicle.

The present invention can be advantageously used in the technical sector of the production and marketing of devices and accessories for the recharging and maintenance of electric and/or hybrid vehicles, in particular in the technical sector of the production and marketing of electric cables intended to be electrically connected on one side. to a source of electrical energy (eg a charging tower) and from the other to the electric vehicle for recharging the electric batteries mounted on the latter.

In the technical sector of the production and marketing of electric and/or hybrid vehicles, the need has long been felt to recharge the batteries mounted on the vehicles themselves in an ever faster and more efficient way. As is known, the batteries of an electric vehicle are recharged by connecting the latter to an electric power source by means of an electric cable. Normally, the complete recharging of an electric vehicle can take several hours, forcing the user to plan the recharge (for example to perform it during the night) or forcing the user himself to long unwanted stops, in the event that the recharge should become needed at an unplanned time.

To overcome these drawbacks, the manufacturers of electric vehicles have for some time been devising methods of fast charging, i.e. able to recharge at least a portion of the batteries in a relatively short time (usually a few tens of minutes) to allow the user to resume the travel without forcing him to the aforementioned long stops.

In order to increase the recharging speed, the aforesaid known methods necessarily provide for increasing as much as possible the intensity of the recharging current, delivered by a suitable recharging apparatus.

Normally, the known type apparatus for recharging provides for the electrical connection of the vehicle to a recharging tower through a recharging device present therein, which device comprises in a known manner at least one recharging electric cable.

This electric charging cable is normally made with the known production technique of electric cables for power transmission, i.e. internally equipped with a central core made of electrically conductive material (normally copper and/or aluminum) covered with a covering layer of electrically insulating material.

For some applications, the known type electric cable also comprises a further protective sheath, normally a coating, placed around the insulating layer and has the purpose of separating the internal part from the external environment and preserving it in terms of mechanical wear or contact with liquids such as oils or from atmospheric phenomena such as UV radiation, ozone, in case of outdoor use.

In the specific case of the application of cables for charging electric vehicles, the internal core is configured to be crossed by the electric charging current, while the external covering layer prevents direct contact with the electrical part, acting both as a mechanical protection, that from possible external agents that can damage the cable, and for this purpose special resins are used (for example polyurethane) able to resist even contact with liquids such as motor lubricating oils, acid solutions, fuels, anti-freeze agents and mixtures of cleaning solvents.

However, the aforementioned high intensity of charging current inevitably leads to an increase in the temperature of the cable, including the covering layer. More in detail, the central core is subjected to heating by ohmic effect every time it is crossed by an electric current and this heating is proportional to the intensity of the current that passes through it.

In this situation, the known type of charging cable has proved to be not free from drawbacks in practice.

The main drawback lies in the fact that the cable of the known type of charging device, if crossed by currents of high intensity, can reach high and dangerous temperatures, i.e. of several tens of degrees Celsius in correspondence with the outer layer, being dangerous if handled directly by the user.

In this situation, the cable of the known type of recharging device is not very reliable and therefore not very usable for fast recharges (ie with high intensity of recharging current), being usable only for slow recharging (i.e. charging with low intensity of current) and not very functional, increasing the time required for recharging.

In order to at least partially obviate the drawbacks of the aforementioned prior art, recharging devices for electric vehicles are known which comprise, in addition to the aforementioned recharging cable of the known type, at least one temperature gauge operatively associated with the recharging cable itself.

More in detail, the meter comprises at least one thermometer (for example a contact or infrared thermometer) applied to the outer surface of the covering layer of the charging cable.

Furthermore, the known type device comprises at least an electronic control unit, such as a PLC, electronically connected to the thermometer and programmed to detect the measurement signals sent by the thermometer and send corresponding alarm signals when a predetermined threshold value is reached, for example a preset temperature value at least potentially harmful to human skin.

Furthermore, the known type device can provide alarm means, for example a display to visually signal to the user that the aforementioned threshold temperature has been reached, or a loudspeaker to acoustically signal that the aforementioned threshold temperature has been reached.

Therefore, even the latter known type of recharging device has proved to be not free from drawbacks in practice.

The main drawback resides in the fact that the known type of recharging device is complex and expensive.

A further drawback resides in the fact that the known type device requires its installation by the user and, if there are no alarm means, a constant view of the temperature signaled by the thermometer, in order to know the status of the charging cable.

A further drawback resides in the fact that electric vehicles are often recharged in the private homes of users, who do not have all the diagnostic tools necessary to prevent any contact with the cable if it is too hot, running the risk of getting burned.

A further drawback resides in the fact that the known type device is very expensive and complex to assemble.

A further drawback of the aforementioned known technique lies in the fact that the thermochromic sheath applied by coating or through the use of strips would be rather "weak", in particular when used in hostile environments: think of the mine where the cable is continuously dragged to earth and a problem is precisely the abrasion of the sheath, which would be lost during normal use, losing the thermochromic effect.

A further drawback resides in the fact that even if the thermochromic layer were applied under the sheath, the latter should necessarily be transparent in order to make the thermochromic effect of the underlying layer visible. In this situation it is evident that following abrasions of the sheath the thermoplastic material becomes opaque, making the effect of the underlying thermochromic layer no longer visible.

A further drawback resides in the fact that the thermochromic pigments cannot be subjected to heat treatments higher than 150°C.

All the drawbacks briefly summarized above make devices of the known type very expensive to maintain and inconvenient in their maintenance.

EP3651307, DE102015009407 and US2020/381142 describe an electric current transport cable for charging a battery in which an external surface *coating* is provided which is applied above the outermost polymer sheath and which is of the thermochromic type, that is, it changes color according to the level of current flowing through the cable. In particular, in such solutions, the thermochromic coating is a distinct element - and in particular it is not made in mass - with the outermost polymeric layer.

The object of the present invention is to propose a cable for recharging an electric vehicle which allows to overcome, at least in part, the drawbacks of the known solutions.

Another object of the invention is to propose an electric cable that is effective in warning a user of any high temperatures.

Another object of the invention is to propose a cable which is easily subject to maintenance.

Another object of the invention is to propose an electric cable which is easy and simple to install.

Another object of the invention is to propose an electric cable which does not require complex and expensive apparatus for signaling any high temperatures.

Another object of the invention is to propose an electric cable which allows to maintain the thermochromic properties even in hostile environments and/or following surface abrasion.

Another object of the invention is to propose an electric cable which can be made easily, quickly and with low costs.

Another object of the invention is to propose an electric cable which is constructively simple and completely reliable.

Another object of the invention is to propose an electric cable which is an alternative and an improvement with respect to the known solutions.

Another object of the invention is to propose an electric cable that can be easily installed on already existing recharging stations.

Another object of the invention is to propose an electric cable which can be made easily, quickly and with low costs.

All these purposes, both individually and in any combination thereof, and others that will result from the following description, are achieved, according to the invention, with an electric cable with the characteristics indicated in claim 1 or with a device for recharging a vehicle with the characteristics indicated in claim 13.

The present invention is further clarified hereinafter in some of its preferred embodiments reported for purely illustrative and non-limiting purposes with reference to the attached drawings, in which:
- Figure 1: shows a schematic front view of a device according to the present invention for recharging an electric vehicle,
- Figure 2: shows a cross-sectional view, made along the line II-II of Figure 1, of the electric cable according to the present invention in a first embodiment;
- Figure 3: shows a cross-sectional view, taken along the line II-II of Figure 1, of the electric cable according to the present invention in a second embodiment.

The present invention relates to an improved electric cable for recharging an electric vehicle, indicated as a whole in the attached figures with the reference number 1.

Preferably the electric cable 1 according to the invention can be advantageously used to electrically connect an electric power source with a 100' electric car to be recharged.

Therefore, the electric cable 1 according to the invention finds advantageous use in the technical sector of the production and marketing of electric devices and accessories for the recharging and maintenance of electric vehicles, such as in particular electric cars.

Obviously, the electric cable 1 according to the present invention can also be advantageously used for other applications without thereby departing from the scope of protection of the present patent, for example for the electrical connection between a source of electrical energy and any electrical load to be powered, preferably at high charging current intensities.

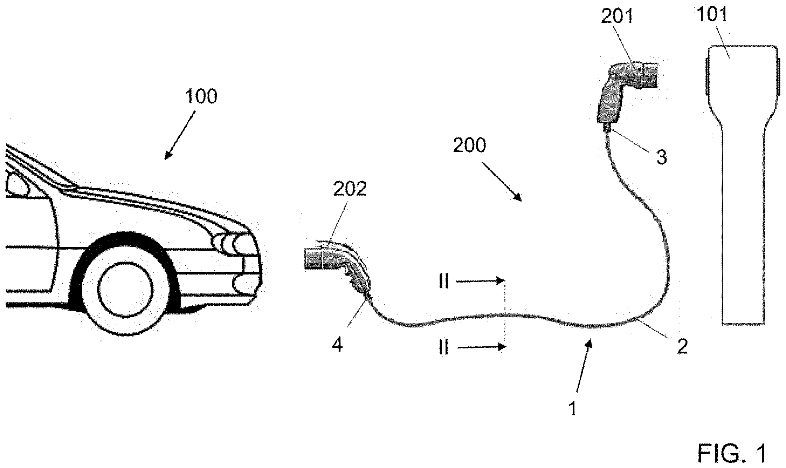

In the following reference will be made to an electric vehicle 100, partially illustrated in the attached figure 1, such as for example an electric car.

More generally, the electric cable 1 object of the present invention can be advantageously used to recharge any type of vehicle which requires recharging of at least one battery mounted on board.

The electric cable 1, for recharging an electric vehicle 100, comprises an elongated flexible body 2 extending between a first end 3 intended to be electrically connected, in particular through a first connector 201, to a source of electric energy 101 and a second end 4 intended to be electrically connected, in particular through a second connector 202, to the electric vehicle 100, in order to recharge it with the aforementioned electrical energy.

The term "electricity" will be understood in the following as a generic term to indicate all the electrical quantities normally needed and used to recharge an electric battery, in particular power, voltage and electric current.

The elongated flexible body 2 of the electric cable 1 conveniently comprises at least one internal core 5, and preferably at least two internal cores 5, made of electrically conductive material extending between the first end 3 and the second end 4 and configured to carry the aforementioned charging electric energy.

Conveniently, the cable 1 can provide further internal cores 5, for example with a smaller cross section, configured to electrically connect a charging station and the electric vehicle.

Conveniently, the internal cores 5 of the cable 1 can all have the same dimensions of the cross section, or they can have different cross sections.

Advantageously, the internal cores 5 are made of metallic material, such as for example copper and/or aluminum or an alloy thereof.

Conveniently, the inner core 5 comprises a plurality of intertwined filaments, each made of electrically conductive material.

The elongated flexible body 2 further comprises at least one electrically insulating layer 7 placed around said at least one internal core 5.

Conveniently, the insulating layer 7 is for example made of polyvinyl chloride, or expanded polyethylene or other dielectric materials.

Advantageously, the insulating layer 7 made of polyvinyl chloride allows to reach continuous operating temperatures up to 70°C.

Preferably, in accordance with a preferential embodiment, the insulating layer 7 is made of rubber, in particular of EPR rubber, i.e. of cross-linked ethylene-propylene rubber.

Advantageously, the insulating layer 7 made of cross-linked ethylene-propylene rubber allows to reach continuous operating temperatures up to 110°C.

In this situation, the insulating layer 7 made of cross-linked ethylene-propylene rubber is particularly suitable for the specific application in the recharging of electric vehicles, in which the high intensity of the recharging current also entails high operating temperatures of the cable 1 according to the invention.

Preferably, each inner core 5 of the cable 1 is externally coated by a respective insulating layer 7.

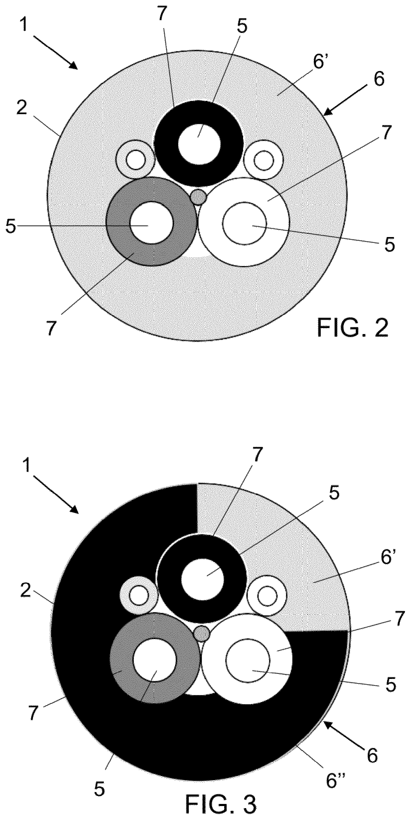

In accordance with the preferential but non-limiting embodiments illustrated in the attached figures 2 and 3, the electric cable 1 is a multipolar cable, i.e. the electric cable 1 includes two or more internal cores 5.

Conveniently, the internal cores 5 can be power cores 5'or control cores 5".

Advantageously, the electric cable 1 comprises at least three internal power cores 5', configured to carry the electric power necessary to recharge the electric vehicle, and at least two internal control cores 5", configured to be crossed by low-power digital signals for the active control of recharging, in a manner known per se to those skilled in the art and therefore not described in detail below.

Conveniently, the internal cores 5 are side by side and extend along mutually substantially parallel directions. Preferably, the internal cores 5 develop intertwined with each other.

In accordance with the preferential embodiment illustrated in the attached figures 2 and 3, the electric cable 1 comprises five internal cores 5, side by side and intertwined with each other.

Conveniently, the electric cable 1 comprises at least one covering layer 6 in place around the at least one inner core 5.

Preferably, the covering layer 6 is placed around said at least one insulating layer 7 which is suitably wrapped around at least one or all of the inner cores 5 of the cable 1.

Conveniently, the covering layer is in direct contact, at least in part, with the insulating layer 7 and/or with said at least one internal core 5 of the cable 1.

Preferably, said at least one covering layer 6 is positioned around all the internal cores 5 of the cable 1.

Preferably, the internal cores 5 of the cable 1 with the respective insulating layers 7 are entirely contained/housed inside said covering layer 6.

The covering layer 6 is advantageously made of material such as to confer the appropriate properties of mechanics resistance and protection from external agents to the internal cores 5 and to the insulating layers 7.

Advantageously, the covering layer 6 is extruded around the insulating layers 7, in turn extruded around the corresponding the inner core 5.

The covering layer 6 of the elongated flexible body 2 of the electric cable 1 is made, at least in a portion 6' of it, of thermochromic material (hereinafter also called thermochromic portion 6') which is configured to vary at least between a first color and a second color at least when the covering layer 6 reaches or exceeds a predetermined threshold temperature.

With the term "thermochromic" (or "thermochromic") we mean any material that can change its coloring/color following a corresponding variation of its temperature. Conveniently, the color variation can be a variation in terms of hue (or tint) and/or brightness and/or lightness and/or intensity (fullness) and/or chroma and/or saturation.

Conveniently, the thermochromic material portion 6' (ie the thermochromic portion 6') can involve a part or the internal covering layer 6. Conveniently, the thermochromic material portion 6' is part of the outermost covering layer 6 of the cable 1 and, in particular, is a whole with said layer.

Conveniently, the portion 6' in thermochromic material is made in bulk in the covering layer 6.

Conveniently, the covering layer 6 - and in particular its portion 6' - is the outermost layer of the electric cable 1, i.e. no further layers above said covering layer 6. Conveniently, no further layer of transparent or translucent material is provided above the covering layer 6 - and in particular of its portion 6'.

In this way, the electric cable 1 according to the present invention is able to give immediate information to a user about his temperature, since the user is able to visually appreciate an overheating, on the basis of a variation of coloring of the elongated body 2 of the cable 1.

Operationally, the covering layer 6 - and therefore the thermochromic portion 6' of the latter - is heated by thermal conduction (direct or through the insulating layer 7), in which the heat is generated by the inner core 5 when it is crossed by an electric current. More in detail, the internal core 5 disperses part of the electrical energy that passes through it in the form of heat, due to the so-called ohmic effect, thus heating the covering layer 6, which surrounds the aforementioned at least one internal core 5, and therefore also the thermochromic portion 6' of said layer 6.

Conveniently, the covering layer 6 is heated by direct thermal conduction with the electrically insulating layer 7. More in detail, the heat emitted by the inner core 5 heats the electrically insulating layer 7 to direct thermal conduction, which in turn heats the covering layer 6.

Advantageously, the electrically insulating layer 7 is not thermally insulating, ie it is preferably thermally permeable and/or conductive.

Conveniently, the thermochromic portion 6' of the covering layer 6 is configured to assume at least two configurations at distinct moments, each of which corresponds to a coloring that is different from the others in terms of tint (or hue) and/or brightness. and/or clarity and/or intensity (fullness) and/or chroma and/or saturation.

Preferably, the thermochromic portion 6' of the covering layer 6 is configured to be able to assume, on the basis of its temperature, at least two different colors (colors) which differ from each other in terms of hue and/or clarity and/or chroma.

Preferably, the thermochromic portion 6' of the covering layer 6 is configured to be able to pass, at least temporarily, in response to an increase in its temperature, from a first color to a second color which differs from the first color in terms of tint and/or clarity and/or chroma.

Preferably, the thermochromic portion 6' of the covering layer 6 is configured to be able to change reversibly, in response to an increase in its temperature, from a first coloring to a second coloring which differs from the first coloring in terms of hue and/or clarity and/or chroma.

Conveniently, in response to the decrease in its temperature, said thermochromic portion 6' of the covering layer 6 can return to room temperature or can maintain said second color.

Conveniently, the thermochromic portion 6' of the covering layer 6 is configured to change coloring between a first configuration, at a lower temperature in which it has a first coloring, and a second configuration, at a higher temperature, in which there is a second coloring that is different from at the first coloring.

For example, the thermochromic portion 6' of the covering layer 6 can be configured to have a first gradation when at room temperature and to vary this gradation as its temperature increases.

Advantageously, the covering layer 6 of the elongated flexible body 2 of the electric cable 1 is entirely made of thermochromic material.

Preferably, said thermochromic material is reversible.

Advantageously, the coloring of the thermochromic portion 6' of the covering layer 6 changes at each temperature variation in a reversible way, i.e. it varies from a first shade of color to a second shade of color and then returns to the first shade when the variation of color ends. temperature.

The covering layer 6 also comprises, preferably at least in correspondence with said portion 6':
- at least one antioxidant phenolic compound, and
- at least one imidazole compound, preferably mercaptobenzimidazole or derivatives thereof (for example with methyl or ethyl or isopropyl or amine or phenyl groups).

Preferably, the thermochromic material of the portion 6' of the cover layer 6 comprises at least one thermochromic dye, at least one antioxidant phenolic compound and at least one imidazole compound which advantageously, in combination, are suitable for neutralizing free radicals to preserve the reversibility of the thermochromic dye.

In particular, following numerous tests carried out, it was found that the thermochromic pigments that form the coloring of the covering layer 6 are affected by oxidative phenomena, in particular caused by free radicals formed for example by the effect of high temperatures, the presence of ozone and UV rays, these conditions also present in the specific application of the cable object of the present invention.

Therefore, advantageously, in order to obviate the aforementioned drawbacks, the covering layer 6 conveniently comprises phenolic compounds and imidazole compounds, suitably adapted to neutralize free radicals to preserve the reversibility of the thermochromic dye, in particular a leuco dye, from the effects of free radicals, which are formed inside the covering layer 6 due to the effect of temperatures and/or ozone and/or UV rays.

Advantageously, the phenolic compound is a primary phenolic antioxidant, in particular with a hindered high molecular weight. This compound is suitably effective as a process stabilizer, but is particularly effective in preventing degradation of the cover layer, particularly due to normal long-term aging. Preferably, the antioxidant phenolic compound is for example pentaerythritol tetrakis [3- [3,5-di-tert-butyl-4-hydroxyphenyl] propionate. Preferably, the antioxidant phenolic compound corresponds to that known on the market under the brand name Irganox^{®} 1010 or Anox^{®}20.

Advantageously, the imidazole compound is configured to cooperate with the thermochromic dye and with the antioxidant phenolic compound.

Advantageously, the imidazole compound is a mercaptobenzoimidazole compound and/or its derivatives, for example with methyl or ethyl or isopropyl or amine or phenyl groups. Preferably, the imidazole compound is 2-mercapto-4(5)-methylbenzylimidazole.

Operationally, from numerous tests carried out, by means of thermogravimetric analysis, by means of a thermobalance, the color variation of the covering layer 6 of the cable 1 subjected to numerous heating and cooling cycles was detected.

More specifically, the tests were carried out in an oxidizing atmosphere and subjecting the cable to temperature cycles between 40°C and 80°C with an upward ramp of 10°C/min and a downward ramp of 5°C/min, carrying out a total of 2,000 cycles. Tests carried out on the cable 1 according to the invention have shown that the reversible thermochromic properties of the covering layer 6 of the cable 1 are substantially the same from the first to the last cycle.

In other words, the electric cable 1 object of the invention is able to maintain its reversible thermochromic capacity unaltered for at least 2,000 charging cycles of an electric car, which cycles correspond to at least 400,000km traveled by the electric vehicle, (in in particular, taking into consideration a recharging cycle every 200km traveled for 2,000 cycles, the corresponding use in km of 400,000km is obtained).

Preferably, the covering layer 6 of the elongated flexible body 2 of the electric cable 1 does not provide for any surface treatment by means of thermochromic material but, otherwise, is itself made of thermochromic material.

Conveniently, the thermochromic portion 6' of the cover layer 6 comprises leuco thermochromic pigments.
Conveniently, the thermochromic portion 6' of the cover layer 6 is made by means of a polyurethane matrix comprising leuco thermochromic pigments and, preferably, protective agents. In particular, the polyurethane matrix includes thermochromic leuco pigments and phenolic compounds and imidazole compounds. Preferably, the portion 6' in thermochromic material comprises a polyurethane matrix with leuco thermochromic pigments and with said at least one antioxidant phenolic compound, and with said at least one imidazole compound, preferably mercaptobenzimidazole or its derivatives. In this way, the covering layer 6 obviates the drawback of losing the aforementioned surface finish, for example following contact with external and/or atmospheric agents.

Therefore, the cable 1 according to the invention is extremely safe and reliable and long lasting.

In accordance with a further embodiment of the present invention, illustrated in the attached figure 3, the covering layer 6 is made of two or more different materials.

More in detail, the covering layer 6 is made at least in a portion 6 of it with the aforementioned thermochromic material.

Conveniently, the portion 6' of thermochromic material develops for at least a part or for the entire longitudinal extension of the cable 1.

Advantageously, the covering layer 6 comprises a first longitudinal portion 6' of thermochromic material and a second longitudinal portion 6", coupled to the first longitudinal band covering the inner core 5, of a second material. Conveniently, the second material may not be a thermochromic material or it may be a thermochromic material which is different, in terms of composition and/or in terms of colors, with respect to the thermochromic material of the first longitudinal portion 6'.

Advantageously, the thermochromic portion 6' of the cover layer 6 is configured to change color in a plurality of intermediate configurations, between the aforementioned first and second configurations, in which it has a corresponding plurality of different shades or shades of color.

In accordance with a first exemplary and non-limiting embodiment, the thermochromic portion 6' of the covering layer 6 of the elongated flexible body 2 of the electric cable 1 is made in such a way as to present a blue pigmentation/color in correspondence with the first configuration and a yellow pigmentation/color in correspondence of the second configuration.

Advantageously, the aforementioned threshold temperature, in which the covering layer 6 is suitably configured to vary from the first to the second configuration, is between 45°C and 75°C and preferably about 60°C.

Conveniently, therefore, when the cable 1, and in particular the covering layer 6, is at a temperature lower than about 45-75°C, and preferably lower than about 60°C, the thermochromic portion 6' of the covering layer 6 of the cable 1 has a blue color, while when it is at a temperature of about 45-75°C, and preferably lower than about 60°C, the thermochromic portion 6' of the covering layer 6 of the cable 1 has a yellow color. In this way, the electric cable 1 according to the present invention is extremely reliable in warning the user autonomously and automatically of a dangerous variation of his temperature, so that the user avoids directly touching the cable 1 itself, obviating the risk of getting burned.

Conveniently, the covering layer 6 of the elongated flexible body 2 of the electric cable 1 is made entirely or in part of reversible thermochromic material, configured to return from the second color, in correspondence with the second configuration, to the first color, in correspondence with the first configuration, ie when the covering layer 6 reaches or drops to a temperature lower than the threshold temperature.

Advantageously, the portion 6' of said covering layer 6, or the entire covering layer 6, is made of said thermochromic material which comprises at least one polyurethane resin, at least one thermochromic additive/dye, at least one antioxidant phenolic compound, at least one mercaptobenzimidazole compound and/or its derivatives, and at least one UV stabilizer. Optionally, the thermochromic material of the portion 6' of the cover layer 6 comprises at least one pigment.

For example, said at least one imidazole compound is a mercaptobenzimidazole compound and/or its derivatives, such as in particular 2-mercapto-4 (5) - methylbenzylimidazole.

In accordance with the preferential embodiment of the present invention, at least the thermochromic portion 6' of the covering layer 6 is made of polyurethane-based resin. Preferably, at least the thermochromic portion 6' of the cover layer 6, or the entire cover layer 6, is made of a thermochromic material comprising at least - and more preferably made up of - the following components:
- polyurethane resin, between 94% w/w and 98% w/w;
- pentaerythritol tetrakis [3- [3,5-di-tert-butyl-4-hydroxyphenyl] propionate, comprised between 0.5% w/w and 1.5% w/w;
- 2-mercapto-4 (5) -methylbenzylimidazole, ranging from 0.5% w/w to 1.5% w/w;
- butanedioic acid, dimethyl ester, 4-hydroxy-2,2,6,6-tetramethyl-1-piperidineethanol, comprised between 0.5% w/w and 1.5% w/w;
- 6-dimethylamino-3,3-bis dimethylamino phenyl isobenzofuranone, comprised between 0.5% w/w and 1.5% w/w;
- 4 - [(2,5-dichlorophenyl) azo] -2,4-dihydro-5-methyl-2-phenyl-3H-pyrazolone, between 0.5% w/w and 1.5% w/w

Advantageously, the polyurethane resin is for example a polyether-based thermoplastic polyurethane (TPU), in particular fireproof and halogen-free.

For example, the polyurethane resin of the covering layer 6 has a density between 0.9 and 1.3 g/cm³ and preferably about 1.12 g/cm³.

Advantageously, the pigment has the IUPAC formula 4 - [(2,5-dichlorophenyl) azo] -2,4-dihydro-5-methyl-2-phenyl-3H-pyrazolone and is preferably configured to provide the covering layer 6 with a yellow color when it exceeds the aforementioned threshold temperature.

Conveniently, the solution according to the invention allows to carry out mass extrusion of the thermochromic material, in particular it allows extrusion at extrusion temperatures of about 200°C, so that the polymeric-based covering layer, preferably polyurethane, outermost of the cable is made with said thermochromic material and at the same time allows to maintain over time the reversibility of the thermochromic effect which, otherwise, could disappear over time due to atmospheric agents (UV rays, oxidative phenomena or other).

Conveniently, as can clearly be understood from the description of the invention, the thermochromic coloring is carried out in bulk with the covering layer 6 which is polymer-based, and preferably polyurethane, obviating the need of the known art to provide a thermochromic coating. In this way, the covering layer 6 (preferably made of polyurethane material) can reach temperatures of at least 200°C or in any case higher than 190°C.

The solution according to the invention allows to have a thermochromic covering layer, preferably based on polyurethane, and made in mass (ie in a single body) which, in addition to the standard intended use for recharging electric vehicles, can be very useful in other applications in hostile environments: for example in mines where the cable according to the invention is continuously dragged to the ground, obviating the risk of losing any coating due to abrasion. The provision of making the portion 6' in thermochromic material of the covering layer 6 "en masse" always makes it possible to obtain the thermochromic effect, and this also as a result of surface abrasions or removal of said portion 6' or part of the layer 6 The present invention also relates to a device 200 for recharging an electric vehicle 100, which comprises at least one electric cable 1 of the type described above and of which, for simplicity of explanation, the same numerical references will be maintained.

The device 200 according to the invention also conveniently comprises at least a first connector 201 electrically connected to the first end 3 of the electric cable 1 and configured to electrically connect the electric cable 1 itself to an electric power source 101.

Furthermore, the device 200 suitably comprises at least a second connector 202 electrically connected to the second end 4 of the electric cable 1 and configured to electrically connect the electric cable 1 itself to the electric vehicle 100 to be recharged.

In accordance with a first preferential embodiment, the first and second connectors 201, 202 are connectors for single-phase alternating current, for example configured to carry an electrical power of between 5kW and 9kW and preferably of about 7kW.

In accordance with a second preferential embodiment, the first and second connectors 201, 202 are connectors for three-phase alternating current, for example configured to carry an electrical power of between 25kW and 50 kW and preferably of about 40kW.

In accordance with further embodiments of the device 200, the first and second connectors 201, 202 are connectors for direct current. In particular, the first and second connectors 201, 202 are connectors of the CHAdeMo and/or CCS-Combo type.

The present invention also relates to a method for producing a cable 1 for recharging an electric vehicle 100 of the type described above and of which, for the sake of simplicity, the same numerical references will be maintained.

The method according to the invention provides for the provision of said at least one internal core 5, which is preferably made, in a manner known per se by those skilled in the art, by interweaving small diameter filaments in electrically conductive material.

The method also provides for hot extruding around the internal core 5, by means of at least one extruder, called at least one covering layer 6 which is made - at least partially, preferably entirely - of thermochromic material.

Preferably, the extrusion of said at least one covering layer 6 takes place at a temperature between 150°C and 200°C.

The synergistic solution of additives selected in the present invention also have an effect on the processability of the matrix at normal process temperatures.

The method therefore conveniently provides for cooling the covering layer 6 to obtain the flexible elongated body 2.

Advantageously, in accordance with a further embodiment of the present invention, the method provides for extruding two different coextruded materials, to form at least a first longitudinal portion 6' in thermochromic material and a second longitudinal portion 6" side by side wrapped around the internal core 5.

Conveniently, before extrusion, the method provides for a component mixing step to form at least the thermochromic material of the covering layer 6.

Advantageously, the method finally provides for winding the cable 1 thus formed into reels for their quick and simple storage.

As is clear from what has been said, the solution according to the invention achieves the intended purposes. In particular, the cable according to the invention is particularly advantageous, since:
- it allows to overcome the drawbacks of the known solutions;
- it is effective in warning a user of any high temperatures;
- it is easily maintained;
- it is easy and simple to install;
- obviates the need for complex and expensive devices for signaling any high temperatures;
- it is easy to implement and with low costs;
- it is constructively simple and completely reliable;
- it is an alternative and an improvement to the known solutions;
- it can be easily installed and/or applied to existing charging stations.

The present invention has been illustrated and described in some of its preferred embodiments, but it is understood that executive variations may be applied to them in practice, without however departing from the scope of protection of the present patent for industrial invention.

## Claims

1. Electric cable (1) for charging an electric vehicle (100), comprising an elongated flexible body (2) extending between a first end (3) intended to be electrically connected to an electric power source (101) and a second end (4) intended to be electrically connected to said electric vehicle (100) to recharge it with said electric energy;
said elongated flexible body (2) comprising inside an external covering layer (6):
- at least one internal core (5) made of electrically conductive material, extending between said first end (3) and said second end (4) and configured to carry said electrical energy;
- at least one electrically insulating layer (7) placed around said at least one internal core (5);
said covering layer (6) of said elongated flexible body (2) being made, at least in a portion thereof (6'), of thermochromic material configured to vary at least between a first coloring and a second coloring at least when said covering layer reaches or exceeds a predetermined threshold temperature,
**characterized in that** said covering layer (6) also comprises, preferably at least in correspondence with said portion (6'):
- at least one antioxidant phenolic compound, and
- at least one imidazole compound, preferably mercaptobenzimidazole or derivatives thereof.

2. Electric cable (1) according to claim 1, **characterized in that** said thermochromic material comprises a thermochromic dye, said at least one antioxidant phenolic compound and said at least one imidazole compound.

3. An electric cable (1) according to claim 1 or 2, **characterized in that** said portion (6') of said covering layer (6) comprises leuco thermochromic pigments.

4. Electric cable (1) according to one or more of the preceding claims, **characterized in that** said portion (6') made of thermochromic material comprises a polyurethane matrix with leuco thermochromic pigments.

5. Electric cable (1) according to one or more of the preceding claims, **characterized in that** said portion (6') made of thermochromic material comprises a polyurethane matrix with leuco thermochromic pigments and with said at least one antioxidant phenolic compound, and with said at least one imidazole compound, preferably mercaptobenzimidazole or its derivatives.

6. Electric cable (1) according to one or more of the preceding claims, **characterized in that** said covering layer (6) is configured to change color between a first configuration, at a lower temperature, in which it has a first color, and a second configuration, at a higher temperature, in which there is a second color which is different from said first color.

7. Electric cable (1) according to one or more of the preceding claims, **characterized in that** said covering layer (6) is configured to change color in a plurality of intermediate configurations, between said first and second configuration, in which it has a corresponding plurality of different shades or shades of color.

8. Electric cable (1) according to one or more of the preceding claims, **characterized in that** said threshold temperature is comprised between about 45°C and 75°C and preferably is about 60°C.

9. Electric cable (1) according to one or more of the preceding claims, **characterized in that** said thermochromic material of said covering layer (6) is reversible, being thus configured to return from the second coloring to the first coloring when said covering layer (6) reaches or drops to a lower temperature than said threshold temperature.

10. An electric cable (1) according to one or more of the preceding claims, **characterized in that** said covering layer (6) is made of polyurethane-based resin.

11. An electric cable (1) according to one of the preceding claims, **characterized in that** at least said portion (6') of said covering layer (6) is made in said thermochromic material which comprises at least the following components:
- at least one polyurethane resin;
- at least one thermochromic additive/dye,
- said at least one antioxidant phenolic compound;
- said at least one mercaptobenzimidazole compound and/or its derivatives;
- at least one UV stabilizer.

12. Electrical cable (1) according to one of the preceding claims, **characterized in that** at least said portion (6') of said covering layer (6) is made in said thermochromic material which comprises at least the following components:
- polyurethane resin, between 94% w/w and 98% w/w;
- pentaerythritol tetrakis [3- [3,5-di-tert-butyl-4-hydroxyphenyl] propionate, between 0.5% w/w and 1.5% w/w,
- 2-mercapto-4 (5) -methylbenzylimidazole, ranging from 0.5% w/w to 1.5% w/w;
- butanedioic acid, dimethyl ester, 4-hydroxy-2,2,6,6-tetramethyl-1- piperidineethanol, comprised between 0.5% w/w and 1.5% w/w;
- 6-dimethylamino-3,3-bis dimethylamino phenyl isobenzofuranone, comprised between 0.5% w/w and 1.5% w/w;
- 4 - [(2,5-dichlorophenyl) azo] -2,4-dihydro-5-methyl-2-phenyl-3H-pyrazolone, between 0.5% w/w and 1.5% w/w.

13. Device(200) for charging an electric vehicle (100) comprising:
- at least one electric cable (1) according to one or more of the preceding claims, and
- at least a first connector (201) electrically connected to said first end (3) of said electric cable (1) configured to electrically connect said electric cable (1) to an electric power source (101);
- at least a second connector (202) electrically connected to said second end (4) of said electric cable (1) configured to electrically connect said electric cable (1) to said electric vehicle (100) to be recharged.

14. Method for the production of a cable (1) for charging an electric vehicle (100) according to one or more of the preceding claims, which method comprises at least:
- providing said at least one internal core (5) covered with insulating material (7);
- hot extruding, by means of at least one extruder, said at least one covering layer (6), which is made, at least in a portion (6'), of thermochromic material, around said electrically insulating layer (7) provided around said inner core (5);
- cooling said covering layer (6), to thus obtain said flexible elongated body (2);
**characterized in that** said covering layer (6) comprises at least phenolic compounds and imidazole compounds.

15. Method according to the preceding claim, **characterized in that** said extrusion of said at least one covering layer (6) takes place at a temperature between 150°C and 200°C, preferably between 190°C and 200°C.

## Patentansprüche

1. Elektrisches Kabel (1) zum Laden eines Elektrofahrzeugs (100), umfassend einen länglichen flexiblen Körper (2), der sich zwischen einem ersten Ende (3), das dazu bestimmt ist, elektrisch mit einer elektrischen Leistungsquelle (101) verbunden zu werden, und einem zweiten Ende (4), das dazu bestimmt ist, elektrisch mit dem Elektrofahrzeug (100) verbunden zu werden, um es mit der elektrischen Energie aufzuladen, erstreckt;
wobei der längliche flexible Körper (2) im Inneren eine äußere Deckschicht (6) umfasst:
- mindestens einen inneren Kern (5) aus elektrisch leitendem Material, der sich zwischen dem ersten Ende (3) und dem zweiten Ende (4) erstreckt und konfiguriert ist, um die elektrische Energie zu leiten;
- mindestens eine elektrisch isolierende Schicht (7), die um den mindestens einen inneren Kern (5) herum angeordnet ist;
wobei die Deckschicht (6) des länglichen flexiblen Körpers (2), zumindest in einem Abschnitt davon (6'), aus thermochromem Material hergestellt ist, das konfiguriert ist, um zumindest zwischen einer ersten Färbung und einer zweiten Färbung zu variieren, zumindest wenn die Deckschicht eine vorbestimmte Schwellentemperatur erreicht oder überschreitet,
**dadurch gekennzeichnet, dass** die Deckschicht (6) ebenfalls, vorzugsweise zumindest am Abschnitt (6'), umfasst:
- mindestens eine antioxidative phenolische Verbindung und
- mindestens eine Imidazolverbindung, vorzugsweise Mercaptobenzimidazol oder Derivate davon.

2. Elektrisches Kabel (1) nach Anspruch 1, **dadurch gekennzeichnet, dass** das thermochrome Material einen thermochromen Farbstoff, die mindestens eine antioxidative phenolische Verbindung und die mindestens eine Imidazolverbindung umfasst.

3. Elektrisches Kabel (1) nach Anspruch 1 oder 2, **dadurch gekennzeichnet, dass** der Abschnitt (6') der Deckschicht (6) thermochrome Leukopigmente umfasst.

4. Elektrisches Kabel (1) nach einem oder mehreren der vorhergehenden Ansprüche, **dadurch gekennzeichnet, dass** der Abschnitt (6') aus thermochromem Material eine Polyurethanmatrix mit thermochromen Leukopigmenten umfasst.

5. Elektrisches Kabel (1) nach einem oder mehreren der vorhergehenden Ansprüche, **dadurch gekennzeichnet, dass** der Abschnitt (6') aus thermochromem Material eine Polyurethanmatrix mit thermochromen Leukopigmenten und mit der mindestens einen antioxidativen phenolischen Verbindung und mit der mindestens einen Imidazolverbindung, vorzugsweise Mercaptobenzimidazol oder Derivate davon, umfasst.

6. Elektrisches Kabel (1) nach einem oder mehreren der vorhergehenden Ansprüche, **dadurch gekennzeichnet, dass** die Deckschicht (6) dazu konfiguriert ist, die Farbe zwischen einer ersten Konfiguration bei einer niedrigeren Temperatur, in der sie eine erste Farbe aufweist, und einer zweiten Konfiguration bei einer höheren Temperatur zu ändern, in der es eine zweite Farbe gibt, die sich von der ersten Farbe unterscheidet.

7. Elektrisches Kabel (1) nach einem oder mehreren der vorhergehenden Ansprüche, **dadurch gekennzeichnet, dass** die Deckschicht (6) dazu konfiguriert ist, die Farbe in einer Vielzahl von Zwischenkonfigurationen zwischen der ersten und der zweiten Konfiguration zu ändern, in denen sie eine entsprechende Vielzahl von verschiedenen Tönen oder Farbtönen aufweist.

8. Elektrisches Kabel (1) nach einem oder mehreren der vorhergehenden Ansprüche, **dadurch gekennzeichnet, dass** die Schwellentemperatur zwischen etwa 45 °C und 75 °C liegt und vorzugsweise etwa 60 °C beträgt.

9. Elektrisches Kabel (1) nach einem oder mehreren der vorhergehenden Ansprüche, **dadurch gekennzeichnet, dass** das thermochrome Material der Deckschicht (6) reversibel ist und somit dazu konfiguriert ist, von der zweiten Färbung zur ersten Färbung zurückzukehren, wenn die Deckschicht (6) eine niedrigere Temperatur als die Schwellentemperatur erreicht oder auf diese abfällt.

10. Elektrisches Kabel (1) nach einem oder mehreren der vorhergehenden Ansprüche, **dadurch gekennzeichnet, dass** die Deckschicht (6) aus einem Harz auf Polyurethanbasis hergestellt ist.

11. Elektrisches Kabel (1) nach einem der vorhergehenden Ansprüche, **dadurch gekennzeichnet, dass** zumindest der Abschnitt (6') der Deckschicht (6) aus dem thermochromen Material hergestellt ist, das zumindest die folgenden Komponenten umfasst:
- mindestens ein Polyurethanharz;
- mindestens ein thermochromes Additiv/Farbstoff,
- die mindestens eine antioxidative phenolische Verbindung;
- die mindestens eine Mercaptobenzimidazolverbindung und/oder Derivate davon;
- mindestens einen UV-Stabilisator.

12. Elektrisches Kabel (1) nach einem der vorhergehenden Ansprüche, **dadurch gekennzeichnet, dass** zumindest der Abschnitt (6') der Deckschicht (6) aus dem thermochromen Material hergestellt ist, das zumindest die folgenden Komponenten umfasst:
- Polyurethanharz, zwischen 94 Gew.- % und 98 Gew.- %;
- Pentaerythrittetrakis [3-[3,5-di-tert-butyl-4-hydroxyphenyl]propionat, zwischen 0,5 Gew.- % und 1,5 Gew.- %,
- 2-Mercapto-4-(5)-methylbenzylimidazol, im Bereich von 0,5 Gew.- % bis 1,5 Gew.- %;
- Butandisäure, Dimethylester, 4-Hydroxy-2,2,6,6-tetramethyl-1-piperidinethanol, zwischen 0,5 Gew.- % und 1,5 Gew.- %;
- 6-Dimethylamino-3,3-bis-dimethylaminophenylisobenzofuranon, zwischen 0,5 Gew.- % und 1,5 Gew.- %;
- 4-[(2,5-Dichlorphenyl)azo]-2,4-dihydro-5-methyl-2-phenyl-3H-pyrazolon, zwischen 0,5 Gew.- % und 1,5 Gew.- %.

13. Vorrichtung (200) zum Laden eines Elektrofahrzeugs (100), umfassend:
- mindestens ein elektrisches Kabel (1) nach einem oder mehreren der vorhergehenden Ansprüche und
- mindestens einen ersten Verbinder (201), der elektrisch mit dem ersten Ende (3) des elektrischen Kabels (1) verbunden ist und dazu konfiguriert ist, das elektrische Kabel (1) elektrisch mit einer elektrischen Leistungsquelle (101) zu verbinden;
- mindestens einen zweiten Verbinder (202), der elektrisch mit dem zweiten Ende (4) des elektrischen Kabels (1) verbunden ist und dazu konfiguriert ist, das elektrische Kabel (1) elektrisch mit dem aufzuladenden Elektrofahrzeug (100) zu verbinden.

14. Verfahren zur Herstellung eines Kabels (1) zum Laden eines Elektrofahrzeugs (100) nach einem oder mehreren der vorhergehenden Ansprüche, wobei das Verfahren mindestens umfasst:
- Bereitstellen des mindestens einen inneren Kerns (5), der mit Isoliermaterial (7) bedeckt ist;
- Heißextrudieren mittels mindestens eines Extruders der mindestens einen Deckschicht (6), die zumindest in einem Abschnitt (6') aus thermochromem Material um die elektrisch isolierende Schicht (7) herum gebildet ist, die um den inneren Kern (5) herum vorgesehen ist;
- Kühlen der Deckschicht (6), um so den flexiblen länglichen Körper (2) zu erhalten;
**dadurch gekennzeichnet, dass** die Deckschicht (6) mindestens phenolische Verbindungen und Imidazolverbindungen umfasst.

15. Verfahren nach dem vorhergehenden Anspruch, **dadurch gekennzeichnet, dass** die Extrusion der mindestens einen Deckschicht (6) bei einer Temperatur zwischen 150 °C und 200 °C, vorzugsweise zwischen 190 °C und 200 °C, erfolgt.

## Revendications

1. Câble électrique (1) pour la recharge d'un véhicule électrique (100), comprenant un corps flexible allongé (2) s'étendant entre une première extrémité (3) destinée à être connectée électriquement à une source d'énergie électrique (101) et une seconde extrémité (4) destinée à être connectée électriquement audit véhicule électrique (100) pour le recharger avec ladite énergie électrique ;
ledit corps flexible allongé (2) comprenant à l'intérieur une couche de recouvrement externe (6) :
- au moins un noyau interne (5) en matériau électroconducteur, s'étendant entre ladite première extrémité (3) et ladite seconde extrémité (4) et configurée pour transporter ladite énergie électrique ;
- au moins une couche électriquement isolante (7) placée autour dudit au moins un noyau interne (5) ;
ladite couche de recouvrement (6) dudit corps flexible allongé (2) étant constituée, au moins dans une partie de celle-ci (6'), d'un matériau thermochromique configuré pour varier au moins entre une première coloration et une seconde coloration au moins lorsque ladite couche de recouvrement atteint ou dépasse une température seuil prédéterminée,
**caractérisé en ce que** ladite couche de recouvrement (6) comprend également, de préférence au moins en correspondance avec ladite partie (6') :
- au moins un composé phénolique antioxydant, et
- au moins un composé imidazole, de préférence le mercaptobenzimidazole ou ses dérivés.

2. Câble électrique (1) selon la revendication 1, **caractérisé en ce que** ledit matériau thermochromique comprend un colorant thermochromique, ledit au moins un composé phénolique antioxydant et ledit au moins un composé imidazole.

3. Câble électrique (1) selon la revendication 1 ou 2, **caractérisé en ce que** ladite partie (6') de ladite couche de recouvrement (6) comprend des pigments thermochromiques leuco.

4. Câble électrique (1) selon l'une ou plusieurs des revendications précédentes, **caractérisé en ce que** ladite partie (6') en matériau thermochromique comprend une matrice en polyuréthane avec des pigments thermochromiques leuco.

5. Câble électrique (1) selon l'une ou plusieurs des revendications précédentes, **caractérisé en ce que** ladite partie (6') en matériau thermochromique comprend une matrice en polyuréthane avec des pigments thermochromiques leuco et avec ledit au moins un composé phénolique antioxydant, et avec ledit au moins un composé imidazole, de préférence le mercaptobenzimidazole ou ses dérivés.

6. Câble électrique (1) selon l'une ou plusieurs des revendications précédentes, **caractérisé en ce que** ladite couche de recouvrement (6) est configurée pour changer de couleur entre une première configuration, à une température inférieure, dans laquelle elle présente une première couleur, et une seconde configuration, à une température supérieure, dans laquelle elle présente une seconde couleur différente de ladite première couleur.

7. Câble électrique (1) selon l'une ou plusieurs des revendications précédentes, **caractérisé en ce que** ladite couche de recouvrement (6) est configurée pour changer de couleur dans une pluralité de configurations intermédiaires, entre ladite première et ladite seconde configuration, dans lesquelles elle présente une pluralité correspondante de nuances ou de tons de couleur différents.

8. Câble électrique (1) selon l'une ou plusieurs des revendications précédentes, **caractérisé en ce que** ladite température seuil est comprise entre environ 45°C et 75°C et de préférence est d'environ 60°C.

9. Câble électrique (1) selon l'une ou plusieurs des revendications précédentes, **caractérisé en ce que** ledit matériau thermochromique de ladite couche de recouvrement (6) est réversible, étant ainsi configuré pour revenir de la seconde coloration à la première coloration lorsque ladite couche de recouvrement (6) atteint ou descend à une température inférieure à ladite température seuil.

10. Câble électrique (1) selon l'une ou plusieurs des revendications précédentes, **caractérisé en ce que** ladite couche de recouvrement (6) est réalisée en résine à base de polyuréthane.

11. Câble électrique (1) selon l'une des revendications précédentes, **caractérisé en ce qu'**au moins ladite partie (6') de ladite couche de recouvrement (6) est réalisée dans ledit matériau thermochromique qui comprend au moins les composants suivants :
- au moins une résine de polyuréthane ;
- au moins un additif/colorant thermochromique,
- ledit au moins un composé phénolique antioxydant ;
- ledit au moins un composé de mercaptobenzimidazole et/ou ses dérivés ;
- au moins un stabilisateur UV.

12. Câble électrique (1) selon l'une des revendications précédentes, **caractérisé en ce qu'**au moins ladite partie (6') de ladite couche de recouvrement (6) est réalisée dans ledit matériau thermochromique qui comprend au moins les composants suivants :
- résine de polyuréthane, entre 94 % en poids et 98 % en poids ;
- tétrakis de pentaérythritol [3-[3,5-di-tert-butyl-4-hydroxyphényl] propionate, entre 0,5 % en poids et 1,5 % en poids,
- 2-mercapto-4 (5) -méthylbenzylimidazole, allant de 0,5 % à poids et 1,5 % en poids ;
- acide butanedioïque, ester diméthylique, 4-hydroxy-2,2,6,6-tétraméthyl-1-pipéridineéthanol, compris entre 0,5 % en poids et 1,5 % en poids ;
- 6-diméthylamino-3,3-bis diméthylamino phényl isobenzofuranone, compris entre 0,5 % en poids et 1,5 % en poids ;
- 4 - [(2,5-dichlorophényl) azo] -2,4-dihydro-5-méthyl-2-phényl-3H-pyrazolone, entre 0,5 % en poids et 1,5 % en poids.

13. Dispositif (200) pour recharger un véhicule électrique (100) comprenant :
- au moins un câble électrique (1) selon l'une ou plusieurs des revendications précédentes, et
- au moins un premier connecteur (201) connecté électriquement à ladite première extrémité (3) dudit câble électrique (1) configuré pour connecter électriquement ledit câble électrique (1) à une source d'énergie électrique (101);
- au moins un second connecteur (202) connecté électriquement à ladite seconde extrémité (4) dudit câble électrique (1) configuré pour connecter électriquement ledit câble électrique (1) audit véhicule électrique (100) à recharger.

14. Procédé de fabrication d'un câble (1) de recharge d'un véhicule électrique (100) selon l'une ou plusieurs des revendications précédentes, lequel procédé comprend au moins :
- la fourniture dudit au moins un noyau interne (5) recouvert d'un matériau isolant (7) ;
- l'extrusion à chaud, d'au moyen d'au moins une extrudeuse, de ladite au moins une couche de recouvrement (6), qui est constituée, au moins dans une partie (6'), d'un matériau thermochromique, autour de ladite couche électriquement isolante (7) prévue autour dudit noyau interne (5) ;
- le refroidissement de ladite couche de recouvrement (6), pour obtenir ainsi ledit corps allongé flexible (2) ;
**caractérisé en ce que** ladite couche de recouvrement (6) comprend au moins des composés phénoliques et des composés imidazoles.

15. Procédé selon la revendication précédente, **caractérisé en ce que** l'extrusion de ladite au moins une couche de recouvrement (6) a lieu à une température comprise entre 150°C et 200°C, de préférence entre 190°C et 200°C.
